# EUROPEAN PATENT SPECIFICATION

(11) **EP 1 521 377 B1**
(45) Date of publication and mention of the grant of the patent: **19.03.2008**
(21) Application number: 05075013.2
(22) Date of filing: 19.10.2001
(51) Int. Cl.: H04B 1/20, H04L 12/46

(54) **Method and device for managing a communication network**
Verfahren und Vorrichtung zum Verwalten eines Kommunikationsnetzes
Procédé et dispositif pour gérer un réseau de communication

(30) Priority: 27.10.2000 FR 0013879
(43) Date of publication of application: 06.04.2005
(62) Divisional of application: 01402716.3
(73) Proprietor: CANON KABUSHIKI KAISHA, Tokyo (JP)
(72) Inventor: Frouin, Laurent, 35700 Rennes (FR)
(74) Representative: Santarelli

(56) References cited:
- EP-A- 0 696 109
- EP-A- 0 849 884
- US-A- 5 488 357

## Description

The present invention concerns the transmission of data in a "packet switching" communication network, in which the data are conveyed in the form of packets of fixed or variable length between network hosts functioning as data sources and receivers. It concerns more particularly what may be called the "management" of such a network, that is to say putting, according to the requirements of the network users, any chosen host in communication with any other chosen host.

The communication networks considered here are of the type comprising on the one hand hosts and on the other hand a sub-network consisting of communication nodes interconnected by means of bidirectional links, each host being connected to a certain node by means of an appropriate interface. A host may for example be connected to the corresponding interface by means of a serial communication bus.

Modern communication networks often have the task of transmitting data of different natures such as video, sound, photographs, text files, and so on. The transmission of these data is subject to variable requirements according to the type of data in question. This is because video, for example, requires continuous data transfer at a particular rate; this is even more true for sound: it is then said that "isochronous" data are being dealt with. On the other hand, it is not necessary to transmit the data in a text file continuously or even in a regular fashion: it is then said that "asynchronous" data are being dealt with; other examples of asynchronous data would be commands for stopping or starting various items of equipment, and also the data supplying printers.

The devices capable of manipulating all these data, commonly referred to today as audio-visual devices, must therefore be able to transmit asynchronous data as well as isochronous data, and in addition be able to transmit isochronous data timed at variable rates.

Such packet switching networks are described notably in the French patent application FR-0001553 in the name of CANON. A detailed description of the data transfer mechanisms, for example of the audio-visual type, can be found therein.

EP0837579 discloses a network of audio/visual devices comprising a sub-network consisting of interconnected nodes (control terminals). A complete list of hosts in the network and their capabilities is maintained in every node in order to actuate any host in the network from any node. The list is created by messages exchanged between the nodes.

EP0696109 discloses a method of selecting input apparatus. In a system wherein a plurality of electronic apparatuses are connected by a communication control bus for communication between those electronic apparatuses, each of the electronic apparatuses selects an input apparatus by sending an inquiry to all other apparatuses in the system on whether they can output data, displaying the apparatuses which respond that output is possible as candidate input apparatuses, and selecting the input apparatus from among the candidate input apparatuses. For an electronic apparatus which can not output data, the reason for such impossibility to output data can be displayed at either the apparatus incapable of outputting data or the apparatus which is to select an input apparatus. Input apparatus selection can be also performed using a list constituted by still images created from the image data supplied by other apparatuses.

EP0849884 discloses remote control signal receivers and methods and remote control systems. According to this document, a remote control signal for indicating reproduction of a DVD which is transmitted from a bidirectional remote commander, is deciphered by a digital TV, then converted to the data format of an IEEE-1394 serial bus, and then transmitted to the DVD. The DVD transmits the response to the received remote control signal to the digital TV, and also starts the reproduction operation. The reproduced signal is supplied to the digital TV through the IEEE-1394 serial bus. The digital TV transmits the signal corresponding to the response from the DVD to the bidirectional remote commander, and also displays the pictures corresponding to the reproduced signal and outputs the audio.

Under these circumstances, a first aim of the invention is to propose a method and device for managing such a communication network, that is to say for remotely triggering the sending of data packets by a chosen host to another chosen host in accordance with the requirements of the network users. It is a case, for example, for the user of a domestic audio-visual network situated close to a television receiver, of starting up the playing of a video cassette housed in a video tape recorder situated in another room in the house, and therefore too far away for the signal transmitted by the remote control of the video tape recorder to be able to reach it, said audio-visual network being able to include several video tape recorders.

Thus the invention concerns, according to a first aspect, a communication apparatus comprising wireless communication means for wirelessly communicating with a wireless communication apparatus; and wired communication means for communicating with at least one distant apparatus; characterized in that it comprises:
- receiving means for receiving an instruction signal for instructing to search a host possessing a predetermined technical feature by said wireless communication means; and
- searching means for searching the host possessing the predetermined technical feature by means of a search signal transmitted through said wired communication means, the search signal containing information representing the predetermined technical feature, wherein said searching means comprises requesting means that sends a request to a distant apparatus through said wired communication means to obtain information about a host connected to said distant apparatus, and continuing searching means that continues searching the host possessing the predetermined technical feature, based upon a response to said request.

According to particular features, the communication apparatus further comprising controlling means for controlling the host searched by said searching means.

According to particular features, said controlling means operates the searched host by an operating command.

The invention also concerns, secondly, a method of searching a host possessing a predetermined technical feature by a communication apparatus, characterized in that it comprises:
- a receiving step of wirelessly receiving an instruction signal instructing to search the host possessing the predetermined technical feature; and
- a searching step of searching the host possessing the predetermined technical feature, the searching step comprising the step of transmitting a search signal containing information representing the predetermined technical feature, wherein said searching step further comprises a requesting step for requesting from a distant apparatus information about a host connected to said distant apparatus and a step of continuing searching based on a response to the requesting step.

Other aspects and advantages of the invention will emerge from a reading of the following detailed description of particular embodiments, given by way of non-limitative examples. The description refers to the drawings which accompany it, in which:
- Figure 1 depicts schematically an audio-visual system according to the invention,
- Figure 2 depicts a connection device according to the invention,
- Figure 3 is a flow diagram representing the main successive steps of the loading, into the memory of the device of Figure 2, of the configuration of the analogue control hosts to which this device is connected,
- Figure 4 is a flow diagram representing the main successive steps executed by the device of Figure 2, to put in relationship the source host and the destination host chosen by the user, according to a certain embodiment of the invention,
- Figure 5 is a flow diagram representing in detail certain steps included in step 404 of Figure 4, the function of these steps being to collect the configurations of all the hosts in the audio-visual system,
- Figure 6 is a flow diagram representing in detail certain steps included in step 443 of Figure 5, the function of these steps being to transmit, according to a first embodiment, in a grouped fashion, the configurations of all the hosts connected to a connection device, to another connection device which has requested this,
- Figure 7 is a flow diagram representing in detail certain steps included in step 443 of Figure 5, the function of these steps being to transmit, according to a second embodiment, one after the other, the configurations of all the hosts connected to a connection device, to another connection device which has requested this,
- Figure 8 depicts the format of the so-called "management" data packets,
- Figure 9 depicts the format of the audio-visual data packets,
- Figure 10 depicts the format of the data packets used in the connection protocol between the switching nodes of the audio-visual system,
- Figure 11 depicts an example of a method of arranging, in a device according to the invention, memory areas intended for the configuration data for the hosts to which it is connected,
- Figure 12 depicts an example of a method of classifying the configuration data in a packet according to Figure 8, and
- Figure 13 depicts an example of organisation of data forming a subset of the data of Figure 12, this subset corresponding to a particular configuration characteristic presented by one or more of the hosts connected to the device sending said packet.

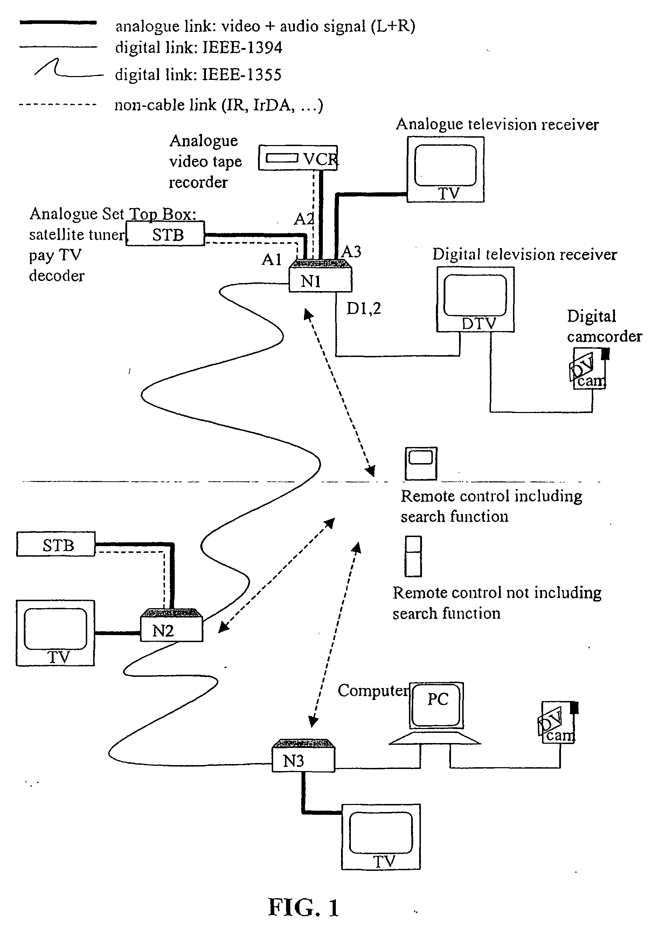

Figure 1 depicts an audio-visual system, which is presented here solely by way of example in order to illustrate the characteristics of the communication networks according to the invention.
- The communication network depicted connects together different hosts consisting here of data processing apparatus such as, for example, printers, servers, computers, scanners, decoders, satellite tuners, analogue or digital television receivers, video tape recorders, loudspeakers, digital photographic apparatus, analogue or digital camcorders, high-definition screens, and so on.

The hosts process digital data functioning preferably according to IEEE-1394. This standard concerns serial communication buses having high performance, and conveying data in packets at speeds of between 100 and 200 Mbps, or even around 400 Mbps (1 Mbps = 10<6> bits per second). It is often

The sub-network in question complies with IEEE-1355. This standard allows the transmission of packets of arbitrary size containing asynchronous data or isochronous data, and in addition imposes no constraint on the transmission rate of the isochronous data. In addition, this standard includes a reliable protocol implementing a "source routing" and a flow control at the level of the links.

The routing of the packets concerns the way in which the data transmitted by a source node find their destination or destinations on the network. When a message is conveyed over the links in the network, it is normally distributed over several data packets. Within each packet, the message data are framed by control instructions forming the appendix of the packet and by identification data forming the header of the packet (or vice versa).

More precisely, the appendix of the packet normally contains a mark identifying the end of packet, except if it is a case of the last packet in a message, in which case said appendix contains a mark identifying the end of the message.

As for the packet header, this indicates notably the destination of said packet and the path which has to be taken by it through the network in order to reach its destination. This is why "source routing" is spoken of. Each node in the network "knows" all these paths, which are determined from the topology of the network, and updated after each modification of this topology. In order to understand the way in which this set of paths is, automatically, formed and then broadcast to all the nodes in the network, reference can be made to the application FR-2778295 in the name of CANON.

Thus, when a user installs a data packet switching sub-network serving as an intermediary between various data processing apparatus, he fixes the topology of the communication network whilst avoiding the drawbacks related to the choice of this topology, and therefore avoiding having to study the audio-visual requirements, the performances of the different data processing apparatus, their location, and so on. In addition, in a switched network, the propagation times being less critical than on a bus, it is possible to increase the length of the cables independently of the propagation time, which advantageously makes it possible to move the communication buses away from each other. It is thus possible to connect the audio-visual apparatus installed in various rooms in a house.

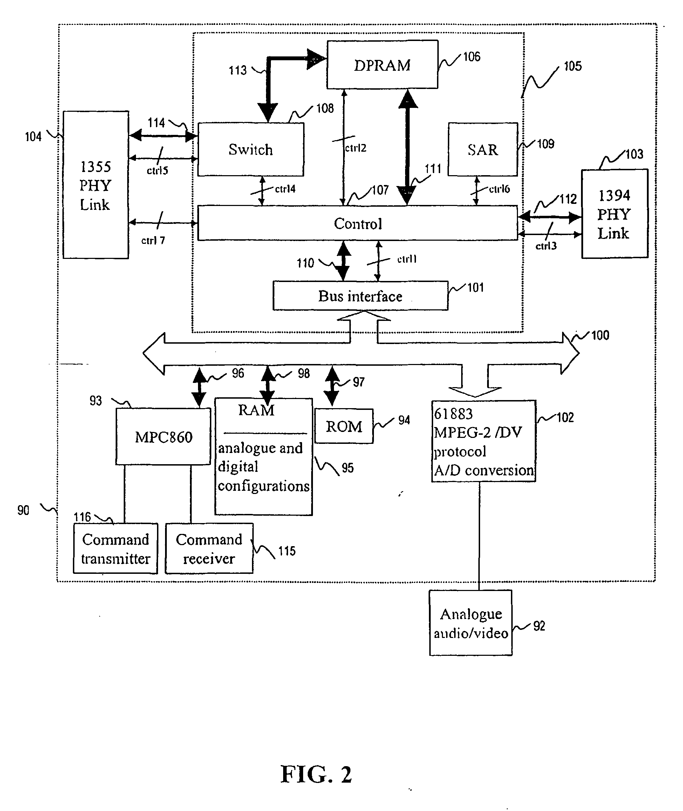

Figure 2 depicts a schematic view of a connection device 90 according to the invention intended to form part of a data packet switching node within an audio-visual system.

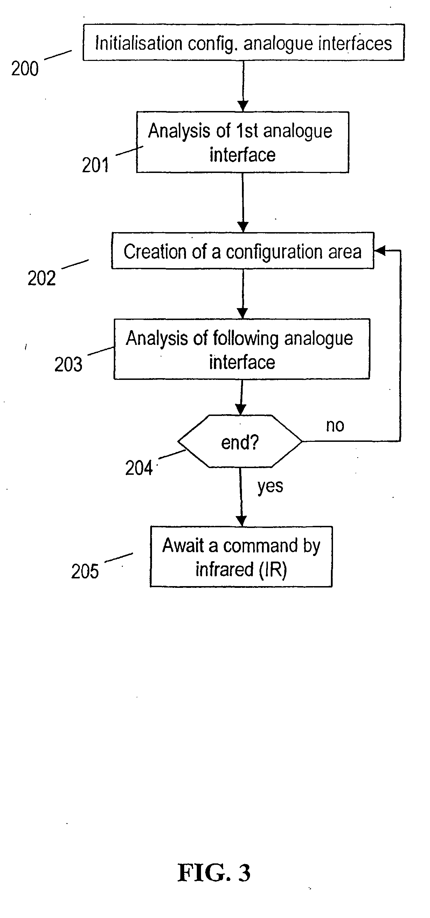

The device 90 has a permanent memory means 94 of the ROM type which contains the software architecture of the device and a temporary memory means 95 of the RAM type. On initialisation, the configurations of the hosts connected to this device 90 are placed in this RAM 95, as explained in detail below with reference to Figure 3.

It is, for example, possible to connect to this device 90 a host 92 consisting of an analogue audio-visual data processing apparatus, such as a television receiver, a video tape recorder or a satellite tuner. These analogue data are converted into digital data (or vice versa), in a conventional manner, by a converter incorporated into the interface 102. The latter may also comprise audio-visual data processing capabilities such as the compression of images in accordance with the MPEG-2 or DV methods. In addition, the interface 102 comprises the audio-visual data flow processing capabilities in accordance with IEEE-1394 and IEC-61883, sections 1 to 5 ("Standard for a Consumer-Use Digital Interface").

The unit 93 is a microprocessor able to execute the software architecture stored in the ROM 94. This microprocessor may for example be an MPC860 controller from Motorola.

On the one hand, the unit 93 transmits or receives digital data by means of the bus 96. On the other hand, the unit 93 comprises input/output ports, of the Serial Communication Controller (SCC) type, which can be connected to the units 115 and 116.

The unit 115 is a receiver able to receive operating commands intended for a certain host in the audio-visual system. The unit 115 may for example be able to receive, from a suitable remote control (see Figure 1), signals in the form of infrared radiation. The signals leaving the receiver 115 and entering the unit 93 by means of the SCC ports are put by this unit 93 in a form enabling them to be transmitted over the links in the sub-network (in the embodiment envisaged, in the form of packets to IEEE-1355).

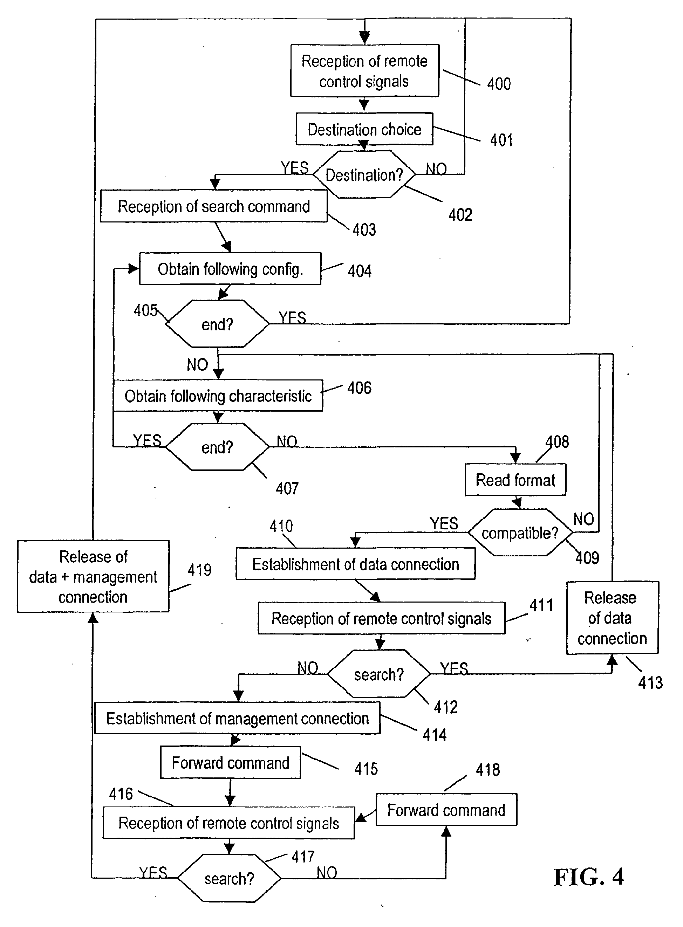

This unit 115 can also where necessary function as a transmitter, for example for a graphical interface serving to control the commands sent by the remote controls (see the second embodiment described with reference to Figure 4).

The unit 116 is a command signal transmitter intended to cause a host associated with this device 90 to operate. This host will be controlled either by means of a connecting cable connecting it to the unit 116, or by means of non-cable signals sent by the unit 116, for example in the form of infrared radiation. The transmitter 116 is supplied by the unit 93 from signals representing these commands which have been received by the unit 93 after having been transmitted in an appropriate form (in the embodiment envisaged, in the form of packets to IEEE-1355), over links in the sub-network.

It should be noted that, for the conventional data processing apparatus exchanging analogue signals, a unit such as 116 constitutes the only means for controlling the operation, whilst an apparatus to IEEE-1394 can always be at least controlled by means of an interface 103 and the bus to which it is connected.

The microprocessor 93, the ROM 94 and the RAM 95 communicate by means of respective address and data buses denoted 96, 97 and 98, themselves connected to a main bus 100. The bus 100 can also connect together other elements, not depicted in the figure, themselves provided with a bus interface and being able to implement, for example, data processing functions.

The bus 100 functions in particular as an "external bus" for the microprocessor 93. The specifications of this functioning can be found in the corresponding user guide ("MPC860 Power QUICC User's Manual", chapter 11). The interface component 101 allows exchanges of data between different modules connected to the bus 100 in accordance with the specifications which have just been mentioned.

As depicted in Figure 2, the node according to the invention also has two interfacing means 103 and 104.

The means 103 complies with "IEEE Std 1394a-2000, Standard for a High Performance Serial Bus (Supplement)". It has at least one external port intended to be connected to a 1394 serial communication bus.

The interfacing means 103 is for example a set of 1394 PHY/LINK components consisting of a PHY TSB21LV03A component and a LINK TSB12LV01A component sold by the company Texas Instruments and 1394 connectors such as those sold by Molex, for example under the reference 53462.

The interfacing means 103 contains memories of the FIFO type (the initials of "First-in First-out", that is to say memories in which the data are read in the order in which they were previously written), which are used during the transfer of data packets of the type in accordance with IEEE 1394. It comprises two FIFO transmission memories known as "ATF" (the initials of the words "Asynchronous Transfer FIFO"), and "ITF" (the initials of the words "Isochronous Transfer FIFO") and a FIFO reception memory known as "GRF" (the initials of "General Receive FIFO"). These FIFO memories are more broadly described in the documentation associated with the LINK TSB12LV01A component.

The means 103 has means of counting the number of pulses according to the clock signal generated by a control module 107, which will be described subsequently. This clock signal is synchronised with the serial communication bus with which it is in relationship, by means of cycle start packets. The frequency of the clock signal generated by the control module 107 is 24.576 MHz +/- 100 ppm. This signal is represented by ctrl3 in Figure 2.

The interfacing means 104 mentioned above is an interface component 1355 connected to the switching part (not shown) of the node of the audio-visual system of which this device 90 forms part, thus enabling the device 90 to communicate with the remainder of the system.

The device 90 also has a means of controlling the data flow 105 which allows the transfer of data between the different interface components 101, 103 and 104. This means 105 is produced in programmable logic, implemented by a component of the "FPGA" type (the initials of "Field Programmable Gate Array"), for example with the reference Virtex, sold by the company XILINX.

This means 105 uses notably a double-port storage unit 106 which makes it possible to store data intended for or coming from the 1355 switched network.

The storage unit 106 can for example be produced in the form of a memory of the "DPRAM" type (the initials of "Dual Port Random Access Memory") with 32 bit access. It has a plurality of memory areas which are managed as individual areas of the "FIFO" type. These memory areas each have associated reading and writing pointers.

Since each memory area is managed like a memory of the FIFO type, its filling and emptying can be carried out at the same time, and independently. This makes it possible to desynchronise the data reading and writing operations carried out by a unit 108 for switching the data reading and writing operations carried out by a control unit 107 (these two units are described below).

This is because the level of occupation of the memory area in question is managed in a circular manner and it is known at all times whether or not the data contained in a memory area have been read. When these data have been read it is then possible to write new data in their place.

The double port storage unit constitutes in some way a queue for the packets and the storage function is performed independently according to the port by which the packets reach the storage unit.

In general terms, all the isochronous or asynchronous data coming from the switched network are stored in the storage unit 106.

This storage is temporary for the asynchronous data packets, (packets constituting a message transmitted in non-connected mode and for the connection protocol packets).

On the other hand, the packets of isochronous data (packets of the "stream" type, that is to say those transmitted in connected mode), are stored solely in this storage unit 106 before they are transmitted over the communication bus to which the device 90 is connected or to other nodes in the audio-visual system.

This is explained by the fact that the data of this type must be transferred as quickly as possible before being transmitted over the bus and must therefore be stored in memory in a storage means which is easily and rapidly accessible.

Likewise, the packets of isochronous data issuing from the communication bus to which the device 90 is connected and which are intended for other nodes are stored solely in the storage unit 106 and not in the RAM 95, for the same reasons as those mentioned above.

As depicted in Figure 2, the data flow control means 105 has several other elements, including a control unit 107 (already mentioned above) which fulfils a function of controlling the storage unit 106, a switching unit 108 (already mentioned above) in communication with the interfacing means 104, with the storage unit 106 and with the control unit 107, and a unit for sequencing the data packets 109 which is in relationship with the control unit 107.

The function of the control unit 107 is to multiplex the accesses in read or write mode to registers of other modules from the main bus denoted 100. It should also be noted that the control unit 107 communicates with the interfacing means 103 and 104 and with the bus interface component denoted 101.

The unit 107 also has control of the bus interface component 101 for the read and write operations on the main bus 100, including notably the transfer in "burst mode". To do this, the unit 107 exchanges data with the component 101 on an add-on bus 110 in accordance with the control signals denoted ctrl 1. The control unit 107 is also responsible for triggering interrupts on the main bus 100 according to particular communication events.

The unit 107 is responsible for controlling the storage unit 106 with regard to the read and write operations in FIFO mode by means of a data bus 111 and control signal bus ctrl 2.

The control unit 107 and the interface means 103 manage the data transfer on a bus 112 conveying the control signals ctrl 3.

Moreover, the control unit 107 controls the switching unit 108 by means of control signals ctrl 4 in order to transfer data from the switching unit to the storage unit 106 by means of a data bus 113 and vice versa.

The switching unit 108 is connected to interface means 104 by means of a data bus 114 conveying control signals ctrl 5.

The data packet sequencing unit 109 denoted SAR (initials of "Segmentation And Reassembling") informs the control unit 107 of the next data packet or packets to be transmitted by means of control signals ctrl 6.

In addition, the sequencing unit 109 checks the reception of the data packets and manages the allocation and release of the memory areas in the storage unit 106.

The control signals ctrl7 exchanged between the interfacing means 104 and the control unit 107 comprise notably the clock signals regenerated from the reception of packets according to IEEE-1355 received by the interfacing means 104.

A 49.152 MHz crystal (not shown) is connected both to the means 104 for transmitting IEEE-1355 packets and to the control unit 107 which manages a clock signal at 24.576 MHz +/- 100 ppm, to the benefit on the one hand of the unit 109 sequencing the IEEE-1355 packets and on the other hand the interfacing means 103, in order to time the transmission of the IEEE-1394 packets.

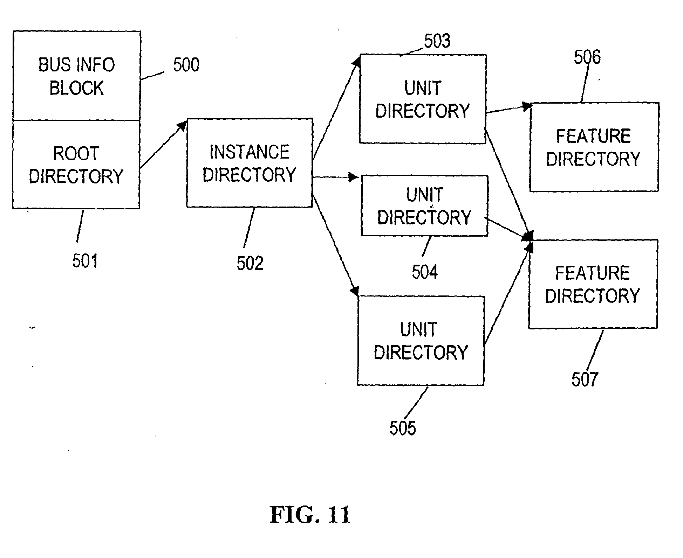

Figure 3 shows the main successive steps 200 to 205 used for the loading, in the RAM 95 of the connection device 90, of the configurations of the analogue-control hosts to which this device is connected. This loading is controlled by the microprocessor 93 on the basis of an algorithm stored in the ROM 94. The configuration areas set up in the RAM 95 at step 202 are described in detail with reference to Figure 11.

According to the invention, in its second aspect, the configuration of the analogue apparatus 92 is derived from the features of the interface 102, which is capable, on the one hand, of processing the data coming from this apparatus 92, and conversely, on the other hand, to transmit to it data which it is capable of processing.

The analogue devices connected to the interfaces such as the interface 102 will thus have allocated to them the functionalities of these interfaces. For example, by means of such an interface, a conventional television receiver of the analogue type will be in a position to display an image issuing from a digital signal to the standard MPEG2; the overall functionality of this interface/analogue television receiver assembly will therefore finally be similar to that of a data processing device (display) in accordance with MPEG2.

Figure 4 is a flow diagram depicting the main successive steps of the algorithm used for connecting the source host and the destination host chosen by the user, according to a first embodiment of the invention. This algorithm is executed, in the connection device 90 connected to the destination host, by the microprocessor 93 on the basis of instructions supplied by the ROM 94.

At step 400, the "local" connection device receives, by means of the reception unit 115, the instruction to seek a destination host amongst the hosts connected to this connection device, this instruction having been sent by the remote control associated with this destination host. The destination host being situated close to the user of the remote control, this user will be in a position to control the running of the operations described in this algorithm.

At step 403, the "local" connection device 90, that is to say one situated close to the user, receives the instruction to seek, in the "distant" connection devices, the host having the appropriate configuration for being able to communicate with the destination chosen by the user in steps 401 and 402. This instruction is sent by the remote control associated with the required source host, and therefore contains the data format information serving to identify this configuration. This search instruction is sent by the user by actuating a special button on the remote control, mentioned in Figure 1 under the name "search function"; as a variant, provision can be made for another button on the remote control, for example the button for starting up the associated apparatus, to trigger the "search function" when it is actuated at this step in the algorithm. When, at step 412, this source host has been identified, a management connection is established at step 414 in order to be able, at step 418, to forward the subsequent commands to the source host (for example, if the source host is a video tape recorder, the command to rewind a video cassette placed therein) sent by the remote control.

Steps 400 to 409 correspond to the search for the source host according to the features entered in its configuration.

At step 410, a source host having features compatible with the destination host is connected to the destination host. Where it is not the source host required by the user (for example, a video tape recorder other than the one containing the video cassette which the user wishes to display), the search is continued at step 413.

According to a second embodiment of the invention, the remote control operations are displayed on a display unit independent of the destination host. It is then possible to select this destination host in the same way as the source host is selected by means of steps 403 to 412. This embodiment has the advantage that it is possible, by virtue of it, to put in communication two hosts which are both remote from the user.

Naturally, whatever the embodiment used, it is possible to put in communication a source host and a destination host connected to the same connection device 90.

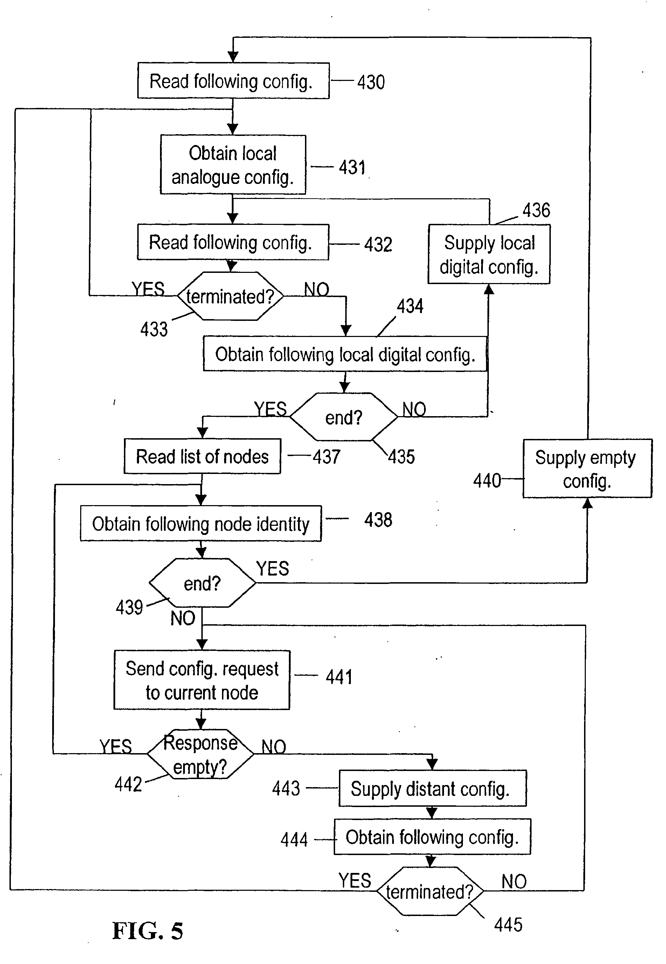

Figure 5 is a flow diagram depicting in detail certain steps included in step 404 in Figure 4, the function of these steps being to collect the configurations of all the hosts in the audio-visual system.

Steps 431 to 436 correspond to the obtaining of the configurations of all the "local" hosts. More precisely, steps 430 to 433 consist of obtaining the functionalities associated with the apparatus processing analogue signals; steps 432 to 436 consist of obtaining the functionalities associated with the apparatus connected to a bus according to IEEE-1394, in accordance with the protocols defined by this standard.

Steps 437 to 445 correspond to the obtaining of the configurations of all the hosts connected to "distant" nodes, each of them responding to the request sent at step 441 by supplying, until the list of hosts connected to it is exhausted (step 442), the configuration of each of them.

The obtaining of this information (step 443) serves to complete an execution of step 404 in Figure 4.

At step 444, a new configuration request corresponding to a new execution of step 404 is awaited.

The algorithm of Figure 5 can, according to various embodiments of the invention, be executed at different times. For example, it can be executed each time a new data processing apparatus is connected to a bus according to IEEE-1394.

It should be noted that, when a new apparatus is connected to a bus according to IEEE-1394, an update signal ("bus reset") is sent; following the reception of this signal, the connection device 90 reads, at least partly, the memory area of each of the apparatus connected to the bus, as well as their functionalities and features. The connection device next stores these data in its random access memory 95.

In a variant, the algorithm of Figure 5 can be executed when a connection device 90 receives a request for inventorying the hosts which are connected to it. It then collects the functionalities of all the apparatus connected to the digital ports, and the functionalities of the analogue ports to which analogue apparatus are connected. The connection device 90 then supplies all of this local information without it necessarily being stored in the RAM 95.

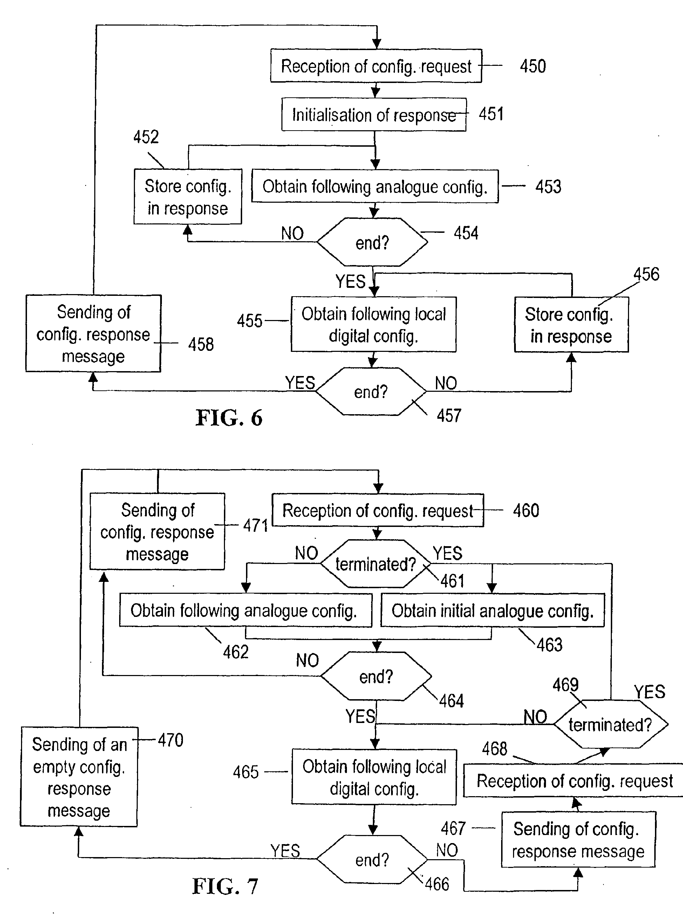

Figure 6 is a flow diagram representing in detail certain steps included in step 443 of Figure 5. the function of these steps being to transmit, according to a first embodiment, in a grouped fashion, the configurations of all the hosts connected to a connection device, to another connection device which has requested this.

Figure 7 is a flow diagram depicting in detail certain steps included in step 443 of Figure 5, the function of these steps being to transmit, according to a second embodiment, one after the other, the configurations of all the hosts connected to a connection device, to another connection device which has requested this.

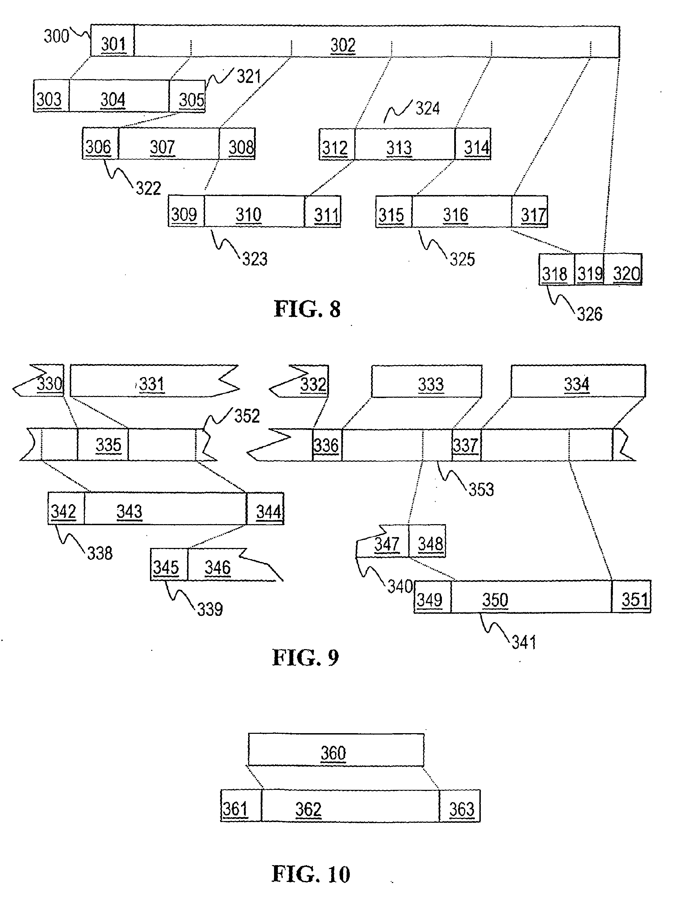

Figure 8 describes the format of the so-called "management" data packets, which are of two different types.

The first type of management data represents information on the configuration of one or more of the hosts of the audio-visual system. When the packet is sent by the future destination of the audio-visual data, it is a case of a quest for information from other nodes; when the packet is sent by one of these other nodes, it is a case of the information on the configuration of the hosts connected to this sending node, intended for said future destination of the audio-visual data.

The second type of management data represents commands for making a particular host connected to the device receiving said packet function. In this case, the packet (which, it will be recalled, complies with the IEEE-1355 standards) may for example have been sent by an interface (see unit 93 in Figure 2) which has received an analogue signal coming from the associated infrared receiver 115, or by an interface (see unit 103 in Figure 2) which has received a digital command according to IEEE-1394 from a host connected to this interface 103.

The message 300 is composed of a packet header field 301, which makes it possible precisely to distinguish between said first and said second type of data, and a user data field 302 ("Message Payload").

In order to be sent over the switched network the message 300 is decomposed into a series of packets 321 to 326 under the control of the sequencing unit 109 of Figure 2.

The packet header fields 303, 306, 309, 312, 315 and 318 contain routing information representing the path to be followed, the identifier of the node which sent the packet, the transfer mode (here the "management" mode), and the number of the sending FIFO memory in the double port storage unit 106. Conventionally the values of these fields are identical.

The user data fields of the packet 304, 307, 310, 313, 316 and 319 contain all the data which constitute the message 300, the packets being sent so that the entire message 300 is sent in order from left to right.

The end of packet fields 305, 308, 311, 314, 317 and 320 are explicitly added by the interfacing means 104 after the sending of each packet. These fields all represent an end of packet marker ("EOP"), as described in IEEE-1355-95. The fields 305, 308, 311, 314 and 317 all have the same value EOP1, whilst only the field 320 which belongs to the last packet in the message has the value EOP2. It should be noted that the size of the field 319 depends notably on the number of data remaining to be sent in the message 300.

Figure 9 describes the format of the packets transferred in stream mode representing audio-visual data going from the source host to the destination host.

The stream of data partially represented by the fields 352 and 353 consists on the one hand of a set of user data fields ("Stream Payload") represented by the fields 330 to 334, and on the other hand a set of packet header fields represented by the fields 335 to 337.

The fields 330 to 334 represent data to be transmitted and each consist for example of a 1394 packet of the isochronous type. In this case, all the fields 330 to 334 have the characteristic of belonging to the same isochronous data stream and therefore contain the same channel number value.

In order to be sent over the switched network, the data stream partially represented by the sets of fields 352 and 353 is decomposed into a series of packets 338 to 341 under the control of the sequencing unit 109.

The packet header fields referenced 342, 345 and 349 contain routing information representing the path to be travelled, the identifier of the node which has sent the packet, the transfer mode (here stream mode), and the number of the FIFO transmission memory in the double port storage unit 106. Conventionally the value of these fields is identical.

The user data fields of the packet referenced 343, 346, 347 and 350 contain some of the data which make up the stream, the packets being sent so that the entire stream is sent in order from left to right.

The end of packet fields referenced 344, 348 and 351 are explicitly added by the interfacing means 104 after the sending of each packet. These field all represent an end of packet marker, and all have the same value EOP1.

Figure 10 describes the format of the data packets used in the connection protocol between the switching nodes of the audio-visual system.

These packets are sent over the switched network under the control of the sequencer unit 109 in the form of a single packet.

The packet header field referenced 361 contains routing information representing the path to be travelled, the identifier of the node which sent the packet, the transfer mode (here protocol mode) and the number of the FIFO transmission memory in the storage unit 106.

The field 360 constitutes the whole of a protocol message, such as for example a connection request message. The user data field of the packet 362 is exactly equivalent to the field 360.

The end of packet field 363 is explicitly added by the interfacing means 104 after the sending of the packet. This field invariably has the value EOP1.

Figure 11 depicts an example of a mode of arranging, in a device according to the invention, memory areas intended for the configuration data of all the hosts to which it is connected.

This arrangement mode is in accordance with the standard "ISO/IEC 13213: 1994 (ANSI/IEEE Std 1212), Information technology - Microprocessor systems - Control and Status Registers (CSR) Architecture for microcomputer buses".

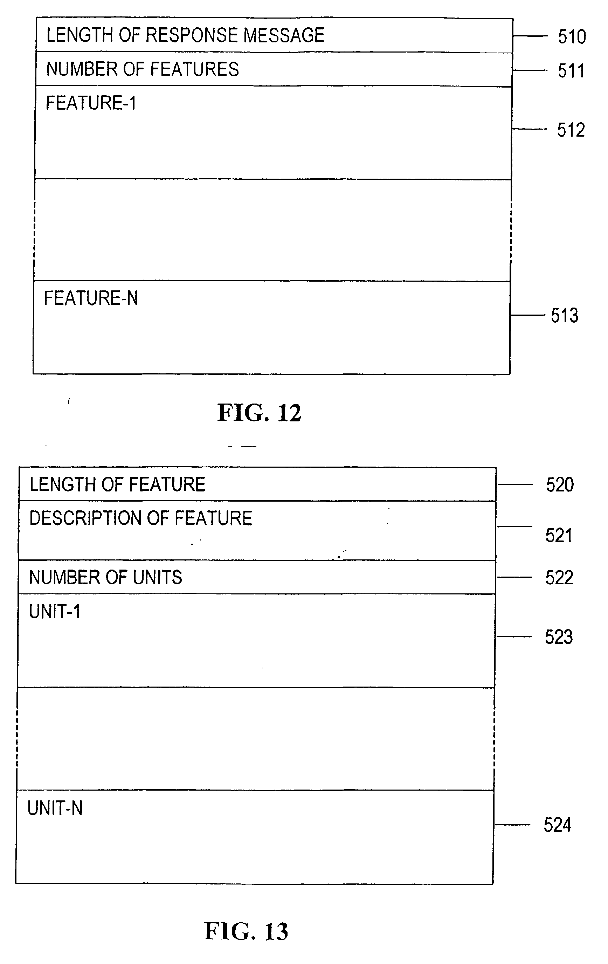

Figure 12 depicts an example of a method of classifying configuration data in a packet according to Figure 8.

This packet is sent either at step 458 of Figure 6, or at steps 467, 470 and 471 of Figure 7.

In the absence of such data in the packet, the field 510 contains a zero value. The field 511 indicates the number of main features, described in the fields 512 to 513.

Figure 13 depicts an example of the organisation of data forming a subset of the data in Figure 12, this subset corresponding to a particular configuration feature presented by one or more of the hosts connected to the device sending said packet, for example the one appearing in the field 512.

The field 520 then indicates the total length of the field 512, except for the field 520 itself. An "empty" field contains solely a field 520 containing a zero value.

The field 521 describes information concerning the format of the data. The field 522 indicates the number of hosts having this particular feature, and the fields 523 to 524 give information concerning each of these hosts.

The present invention is not limited to the embodiments described above: in fact, an expert will be able to implement various variants of the invention whilst remaining within the scope of the accompanying claims.

For example, the hosts in the network according to the invention can be apparatus able to send or receive data of a nature other than audio-visual data.

## Claims

1. Communication apparatus comprising wireless communication means (115, 116) for wirelessly communicating with a wireless communication apparatus; and wired communication means (103, 104) for communicating with at least one distant apparatus; **characterized in that** it comprises:
- receiving means (115) for receiving an instruction signal instructing to search a host possessing a predetermined technical feature by said wireless communication means; and
- searching means for searching the host possessing the predetermined technical feature by means of a search signal transmitted through said wired communication means, the search signal containing information representing the predetermined technical feature, wherein said searching means comprises requesting means that sends a request to a distant apparatus through said wired communication means to obtain information about a host connected to said distant apparatus, and continuing searching means that continues searching the host possessing the predetermined technical feature, based upon a response to said request.

2. Communication apparatus according to claim 1, that further comprises controlling means for controlling the host searched by said searching means.

3. Communication apparatus according to claim 2, wherein said controlling means operates the searched host by an operating command.

4. Method of searching a host possessing a predetermined technical feature by a communication apparatus, **characterized in that** it comprises:
- a receiving step of wirelessly receiving an instruction signal instructing to search the host possessing the predetermined technical feature; and
- a searching step of searching the host possessing the predetermined technical feature, the searching step comprising the step of transmitting a search signal containing information representing the predetermined technical feature, wherein said searching step further comprises a requesting step for requesting from a distant apparatus information about a host connected to said distant apparatus and a step of continuing searching based on a response to the requesting step.

## Patentansprüche

1. Kommunikationsvorrichtung mit
einer drahtlosen Kommunikationseinrichtung (115, 116) zum drahtlosen Kommunizieren mit einer drahtlosen Kommunikationsvorrichtung; und
einer drahtgebundenen Kommunikationseinrichtung (103, 104) zum Kommunizieren mit zumindest einer entfernt angeordneten Vorrichtung;
**gekennzeichnet durch**
eine Empfangseinrichtung (115), um mittels der drahtlosen Kommunikationseinrichtung ein Befehlssignal mit einer Anweisung zu empfangen, einen Zentralrechner mit einem vorbestimmten technischen Merkmal zu suchen; und
eine Sucheinrichtung, um den Zentralrechner mit dem vorbestimmten technischen Merkmal mittels eines Suchsignals zu suchen, das über die drahtgebundene Kommunikationseinrichtung übermittelt wird und Informationen beinhaltet, die das vorbestimmte technische Merkmal repräsentieren;
wobei die Sucheinrichtung
eine Anfrageeinrichtung, die eine Anfrage an eine entfernte Vorrichtung über die drahtgebundene Kommunikationseinrichtung sendet, um Informationen über einen Zentralrechner zu erhalten, der mit der entfernten Vorrichtung verbunden ist, und
eine Dauersucheinrichtung aufweist, die das Suchen des Zentralrechners mit dem vorbestimmten technischen Merkmal basierend auf einer Antwort auf die Anfrage fortsetzt.

2. Kommunikationsvorrichtung gemäß Anspruch 1, mit einer Steuereinrichtung zum Steuern des seitens der Sucheinrichtung gefundenen Zentralrechners.

3. Kommunikationsvorrichtung gemäß Anspruch 2, wobei die Steuereinrichtung den gefundenen Zentralrechner über einen Betriebsbefehl betreibt.

4. Verfahren zum Suchen eines Zentralrechners, der ein vorbestimmtes technisches Merkmal besitzt, mittels einer Kommunikationsvorrichtung, mit:
einem Empfangsschritt des drahtlosen Empfangens eines Befehlssignals, das ein Suchen des Zentralrechners mit dem vorbestimmten technischen Merkmal anweist; und
einem Suchschritt des Suchens des Zentralrechners mit dem vorbestimmten technischen Merkmal,
wobei der Suchschritt den Schritt des Übertragens eines Suchsignals mit Informationen hinsichtlich des vorbestimmten technischen Merkmals aufweist, und wobei der Suchschritt zudem einen Anfrageschritt des Anfragens von einer entfernten Vorrichtung von Informationen über einen Zentralrechner, der mit der entfernten Vorrichtung verbunden ist, und zudem einen Schritt des Fortsetzens der Suche basierend auf einer Antwort auf den Anfrageschritt umfasst.

## Revendications

1. Appareil de communication comportant un moyen (115, 116) de communication sans fil pour communiquer sans fil avec un appareil de communication sans fil ; et un moyen (103, 104) de communication câblée pour communiquer avec au moins un appareil distant ; **caractérisé en ce qu'**il comporte :
- un moyen de réception (115) destiné à recevoir un signal d'instruction de recherche d'un hôte possédant une caractéristique technique prédéterminée, par ledit moyen de communication sans fil ; et
- un moyen de recherche destiné à rechercher l'hôte possédant la caractéristique technique prédéterminée au moyen d'un signal de recherche transmis par l'intermédiaire dudit moyen de communication câblée, le signal de recherche contenant de l'information représentant la caractéristique technique prédéterminée, dans lequel ledit moyen de recherche comporte un moyen de requête qui envoie une requête à un appareil distant par l'intermédiaire dudit moyen de communication câblée pour obtenir de l'information concernant un hôte connecté audit appareil distant, et un moyen de recherche continue qui continue de rechercher l'hôte possédant la caractéristique technique prédéterminée, sur la base d'une réponse à ladite requête.

2. Appareil de communication selon la revendication 1, qui comporte en outre un moyen de commande destiné à commander l'hôte recherché par ledit moyen de recherche.

3. Appareil de communication selon la revendication 2, dans lequel ledit moyen de commande actionne l'hôte recherché par un ordre d'actionnement.

4. Procédé de recherche d'un hôte possédant une caractéristique technique prédéterminée par un appareil de communication, **caractérisé en ce qu'**il comprend :
- une étape de réception sans fil d'un signal d'instruction de recherche de l'hôte possédant la caractéristique technique prédéterminée ; et
- une étape de recherche de l'hôte possédant la caractéristique technique prédéterminée, l'étape de recherche comprenant l'étape d'émission d'un signal de recherche contenant de l'information représentant la caractéristique technique prédéterminée, ladite étape de recherche comprenant en outre une étape de requête pour demander à un appareil distant de l'information concernant un hôte connecté audit appareil distant et une étape de recherche continue basée sur une réponse à l'étape de requête.
